# EUROPEAN PATENT SPECIFICATION

(11) **EP 4 386 877 B1**
(45) Date of publication and mention of the grant of the patent: **09.12.2026**
(21) Application number: 22950446.9
(22) Date of filing: 21.10.2022
(51) Int. Cl.: H01M 10/42, H01M 10/48, H01M 10/0587, H01M 10/613, H01M 10/617, H01M 10/63, H01M 50/249

(54) **BATTERY PACK, ELECTRICAL APPARATUS, BATTERY PACK DETECTION METHOD, AND COMPUTER STORAGE MEDIUM**
BATTERIEPACK, ELEKTRISCHE VORRICHTUNG, BATTERIEPACKDETEKTIONSVERFAHREN UND COMPUTERSPEICHERMEDIUM
BLOC-BATTERIE, APPAREIL ÉLECTRIQUE, PROCÉDÉ DE DÉTECTION DE BLOC-BATTERIE ET SUPPORT DE STOCKAGE INFORMATIQUE

(43) Date of publication of application: 19.06.2024
(73) Proprietor: Contemporary Amperex Technology (Hong Kong) Limited, Central, Central And Western District (HK)
(72) Inventor: ZHU, Cuicui, Ningde City, Fujian 352100 (CN); ZHANG, Jijun, Ningde City, Fujian 352100 (CN); WANG, Shaofei, Ningde City, Fujian 352100 (CN); WEI, Yimin, Ningde City, Fujian 352100 (CN)
(74) Representative: Ran, Handong
(86) International application number: PCT/CN2022/126639
(87) International publication number: WO 2024/082260

(56) References cited:
- WO-A1-2021/071406
- CN-A- 112 034 358
- CN-A- 113 295 296
- CN-A- 114 725 551
- CN-U- 215 680 806
- US-A1- 2014 370 338
- US-A1- 2017 331 157
- US-A1- 2020 280 108
- US-A1- 2022 085 428

## Description

### TECHNICAL FIELD

The present application relates to the field of new energy technology, and more particularly, to a battery pack, an electric apparatus, a method for detecting a battery pack, and a computer storage medium.

### BACKGROUND

With the development of the new energy technology, batteries have been more and more widely used in various aspects. However, a thermal runaway phenomenon may occur in a battery due to various reasons, and thus a large amount of heat and harmful gases are emitted, which causes the battery to catch fire or even explode. Therefore, in order to ensure electric apparatus and personnel safety, thermal runaway detection has become one of the problems to be solved urgently in the field of batteries.

Prior art thermal detection methods are disclosed by patent applications US 2020/280108 A1 and WO 2021/071406 A1.

### SUMMARY

Embodiments of the present application provide a battery pack, an electric apparatus, a method for detecting a battery pack, and a computer storage medium, and aim to provide a thermal runaway detection solution.

In one aspect, as defined in independent claim 1,
the present application provides a battery pack including
a cell module including at least one cell;
a first collecting module including at least one first collecting unit, the first collecting unit being arranged in the cell and configured to collect first operation data of the cell; and
a data processing module connected with the first collecting unit and configured to perform a thermal runaway detection on the cell based on the first operation data to obtain a first detection result, wherein the first collecting unit comprises a temperature collecting unit configured to collect first temperature data of the cell, the first operation data comprising the first temperature data; and the data processing module is configured to perform the thermal runaway detection on the cell through the first temperature data, and when the first temperature data meets a temperature runaway condition, obtain the first detection result as the cell being at risk of the thermal runaway, wherein the first collecting unit further comprises a level-one collecting unit; the level-one collecting unit is configured to collect second operation data other than the first temperature data of the cell, and the first operation data comprises the second operation data. The battery pack is characterised in that the data processing module is further configured to perform the thermal runaway detection on the cell through the first temperature data when the second operation data meets a corresponding type of data detection condition.

By arranging a cell module, a first collecting module including at least one first collecting unit, and a data processing module connected with the first collecting unit, the battery pack according to the embodiments of the present application can perform a thermal runaway detection on the cell based on the first operation data to obtain the first detection result. Furthermore, the first collecting unit is arranged in the cell, and then operation data of an interior of the cell is collected directly, which reflects an operation condition of the interior of the cell more realistically, and helps to provide a thermal runaway detection solution with high accuracy and sensitivity. The solution can leave more time for subsequent thermal management and thermal runaway warning notification.

Optionally, the battery pack further includes:
a thermal management module connected with the data processing module and configured to, under a condition that the first detection result indicates that any of the at least one cell is at risk of a thermal runaway, balance a temperature of the cell.

In these embodiments, the thermal management module may balance the temperature of the cell after a level-one warning is generated (i.e., after the first detection result indicates that any cell is at risk of the thermal runaway), which can lower the temperature of the cell in advance compared to the related art, so as to reduce the thermal runaway risk of the cell, and improve safety of usage of the cell.

According to the claimed invention, a thermal runaway warning solution is provided by arranging the temperature collecting unit in the cell, which helps to provide a thermal runaway detection solution with high accuracy and sensitivity, helps to achieve a battery thermal runaway management as early as possible, and improves the accuracy of thermal runaway warning. The solution leaves more time for subsequent thermal management and thermal runaway warning notification, and reduces the technical problem in the related art that the thermal runaway warning severely lags.

According to the claimed invention, before the thermal runaway detection is performed on the cell based on the first temperature data, a data detection condition judgment based on the second operation data is added, possible abnormalities of the temperature collecting unit are excluded, the accuracy of the thermal runaway detection of the cell is improved, and meanwhile a reference basis is provided to find a root cause of the thermal runaway of the cell.

Optionally, the cell includes an electrode plate wound around a winding axis to form a wound structure, the electrode plate includes a plurality of straight portions and a plurality of bent portions, the plurality of straight portions are stacked in a first direction, the plurality of bent portions are at least partially bent in an arc shape and connect two adjacent straight portions of the plurality of straight portions, and the first direction is perpendicular to the winding axis;
the level-one collecting unit includes:
a pressure collecting unit corresponding to the temperature collecting unit, the pressure collecting unit being attached to the straight portion and/or the bent portion and configured to collect pressure data of the cell, the second operation data including the pressure data;
under a condition that the pressure data is greater than a pressure threshold, the second operation data meets the corresponding type of data detection condition.

In these embodiments, a situation is considered in which an excessive pressure of the interior of the cell causes a temperature of the interior of the cell to increase and then a thermal runaway occurs. A level-one warning of thermal runaway caused by local pressure can be achieved by means of a combination of the pressure collecting unit and the temperature collecting unit arranged at the interior of the cell, and based on performing a thermal runaway risk evaluation, the root cause of the thermal runaway of the interior of the cell can be found, which provides a reference for subsequent thermal runaway analysis and detection.

Optionally, the data processing module is further configured to, under a condition that the pressure data is greater than the pressure threshold and the first temperature data does not meet the temperature runaway condition, indicate the first detection result as the cell being under an abnormal pressure.

In these embodiments, the data processing module performs an analysis on the case in which the cell is under an excessive pressure, determines a thermal runaway caused by a local abnormal pressure or the local abnormal pressure, and achieves an accurate abnormality analysis on the excessive pressure of the interior of the cell.

In addition, by arranging the gas and gas pressure collecting unit at the interior of the cell, concentrations of various types of gases such as carbon monoxide, carbon dioxide and methane can be detected, the thermal runaway warning solution can be more reliable, the scope of thermal runaway risk warning is increased, so as to help to reduce errors.

Optionally, the cell includes a bare cell, a case and a top cover, the bare cell being accommodated in an accommodation space enclosed by the case and the top cover; the level-one collecting unit includes:
a gas pressure and gas collecting unit arranged between the top cover and the bare cell and configured to collect gas pressure data and at least one type of gas concentration in the case;
under a condition that the gas pressure data is greater than a gas pressure threshold and any type of gas concentration is greater than a corresponding type of concentration threshold, the second operation data meets the corresponding type of data detection condition.

In these embodiments, by arranging a gas pressure and gas collecting unit at the interior of the cell, whether the phenomenon of a large amount of gas generation occurs in the cell can be detected, and then, in combination with a change in the first temperature data, an accurate judgment of the thermal runaway of the cell caused by the gas generation abnormality is achieved.

Optionally, the data processing module is further configured to indicate the first detection result as a gas generation abnormality of the cell under a condition that the gas pressure data is greater than the gas pressure threshold, the first temperature data does not meet the temperature runaway condition, and any type of gas concentration is greater than the corresponding type of concentration threshold.

In these embodiments, by determining a thermal runaway caused by gas generation or a gas generation abnormality, an accurate abnormality analysis of the gas generation at the interior of the cell is achieved, and then the cause of the thermal runaway is found, and a favorable reference for the subsequent detection and analysis of the thermal runaway of the cell can be provided.

Optionally, the battery pack further includes:
a second collecting module configured to collect electrical data of the cell, the electrical data including at least one of a voltage value and a current value of a loop where the cell is located and an insulation resistance value of the cell;
under a condition that the insulation resistance value is less than a resistance threshold, the current value is greater than a current threshold, or a dropping rate of the voltage value is greater than a rate threshold, the second operation data meets the corresponding type of data detection condition.

In these examples, a thermal runaway risk caused by electrical reasons of the cell is considered, and the root cause of the thermal runaway of the interior of the cell is obtained, and a reference is provided for the subsequent analysis and detection of the thermal runaway.

Optionally, the data processing module is further configured to indicate the first detection result as a short circuit abnormality of the cell under a condition that it is determined based on the electrical data that the second operation data meets the corresponding type of data detection condition and the first temperature data does not meet the temperature runaway condition.

In the embodiment, after the judgment of the electrical data, whether the first temperature data meets the temperature runaway condition is determined, whether the short circuit abnormality of the cell causes the cell to be at risk of the thermal runaway can be determined, and an accurate abnormality analysis of a short circuit of the cell is achieved.

In these embodiments, a level-one signal collecting system is constructed based on a combination of the electrical data, the gas generation, and the internal pressure of the cell, and then a judgment about whether the first temperature data meets the temperature runaway condition is triggered, and from various root causes of the thermal runaway, the causes of the thermal runaway can be found thoroughly while the warning of the thermal runaway risk is achieved.

In another aspect, the present application provides an electric apparatus including the battery pack of the above-described aspect.

In yet another aspect, as defined in independent claim 10, the present application provides a method for detecting a battery pack, the method being applied to a data processing module, the battery pack including a cell module and a first collecting module, the cell module including at least one cell, the first collecting module including at least one first collecting unit, the first collecting unit being arranged in the cell, and the method including:
acquiring first operation data of the cell collected by the first collecting unit;
performing a thermal runaway detection on the cell based on the first operation data to obtain a first detection result, comprising: acquiring second operation data collected by the level-one collecting unit and first temperature data collected by the temperature collecting unit, the first operation data comprising the second operation data and the first temperature data. The method is characterised by performing the thermal runaway detection on the cell through the first temperature data when the second operation data meets a corresponding type of data detection condition.

In yet another aspect, the present application further provides a readable storage medium having programs or instructions stored thereon. The programs or the instructions, when executed by a processor, perform the steps of the method for detecting a battery pack of the above-described aspect.

In yet another aspect, as defined in independent claim 12, the present application also provides a computer storage medium which, when executed by a processor, performs the method for detecting a battery pack of the above-described aspect.

In yet another aspect, the present application further provides a computer program product executable by a processor to perform the steps of the method for detecting a battery pack of the above-described aspect.

The above description is merely an overview of the technical solution of the present application. In order to make the technical means of the present application understood more clearly and implemented according to the contents of the description, and in order to make the above and other objects, features and advantages of the present application understood more clearly, specific implementations of the present application are particularly provided below.

### BRIEF DESCRIPTION OF THE DRAWINGS

The drawings necessary for explaining embodiments are described briefly below to illustrate the technical solutions of the embodiments of the present application more clearly. Obviously, the drawings described below illustrate merely some embodiments of the present application. Other figures can be obtained by those with ordinary skill in the art from those drawings without any inventive efforts.
Fig. 1 shows a schematic module structural diagram of an embodiment of a battery pack according to the embodiments of the present application.
Fig. 2 shows a schematic module structural diagram of another embodiment of a battery pack according to the embodiments of the present application.
Fig. 3 shows a schematic module structural diagram of yet another embodiment of a battery pack according to the embodiments of the present application.
Fig. 4 shows a schematic diagram of a position of a temperature collecting unit involved in the battery pack according to the embodiments of the present application.
Fig. 5 shows a schematic diagram of another position of a temperature collecting unit involved in the battery pack according to the embodiments of the present application.
Fig. 6 shows a schematic module structural diagram of yet another embodiment of a battery pack according to the embodiments of the present application.
Fig. 7 shows a schematic module structural diagram of yet another embodiment of a battery pack according to the embodiments of the present application.
Fig. 8 shows a schematic module structural diagram of yet another embodiment of a battery pack according to the embodiments of the present application.
Fig. 9 shows a schematic module structural diagram of yet another embodiment of a battery pack according to the embodiments of the present application.
Fig. 10 shows an optional schematic flow chart of a method for detecting a battery pack according to the embodiments of the present application.

Reference numerals are as follows:
100. battery pack;
110. cell module; 120. first collecting module; 130. data processing module;
111. cell; 121. first collecting unit;
210. thermal management module;
310. temperature collecting unit;
410. straight portion; 420. bent portion; X. first direction;
610. level-one collecting unit;
710. pressure collecting unit;
810. gas pressure and gas collecting unit;
910. second collecting module.

### DETAILED DESCRIPTION

Embodiments of technical solutions of the present application will be described in detail below with reference to the accompanying drawings. Embodiments below are only for more clear illustration of the technical solutions of the present application, therefore are only used as examples, and cannot be used to limit the protection scope of the present application.

Unless otherwise defined, all technical and scientific terms used in the present application have the same meanings as commonly understood by those skilled in the technical field of the present application. The terms used in the present application are only for purposes of description of specific embodiments, and are not intended to limit the present application. The terms "comprising" and "having" in the description and claims of the present application and the above brief description of the drawings and any variations thereof are intended to cover non-exclusive inclusions.

The technical terms "first", "second" and the like in the description of the embodiments of the present application are only used to distinguish different objects, but should not be understood that they indicate or imply relative importance or imply the number, specific sequence or primary and secondary relationships of the technical features that they refer to. In the description of the embodiments of the present application, "a plurality of" means two or more, unless otherwise explicitly and specifically limited.

"Embodiment" mentioned in the present application means that particular features, structures or characteristics described in combination with the embodiment may be included in at least one embodiment of the present application. Appearances of the phrase in various places in the description are not necessarily all referring to the same embodiment, nor a separate or alternative embodiment that is mutually exclusive of other embodiments. It should be explicitly and implicitly understood by those skilled in the art that the embodiments described herein may be combined with other embodiments.

In the description of the embodiments of the present application, the term "and/or" means only a kind of association relationship that describes associated objects, which indicates three possible kinds of relationships. For example, "A and/or B" may indicate the following three cases: A exists alone, A and B exist simultaneously, and B exists alone. In addition, the character "/" herein generally represents that there is an "or" relationship between the associated objects preceding and succeeding the character "/" respectively.

In the description of the embodiments of the present application, the term "a plurality of" means two or more (including two), similarly, "a plurality of groups" means two or more groups (including two groups), and "a plurality of sheets" means to two or more sheets (including two sheets).

In the description of the embodiments of the present application, the technical terms "center", "longitudinal", "lateral", "length", "width", "thickness", "upper", "lower", "front", "back", "left", "right", "vertical", "horizontal", "top", "bottom", "inner", "outer", "clockwise", "anticlockwise", "axial", "radial", "circumferential", and the like indicate orientations or positional relationships based on the orientations or the positional relationships shown in the drawings, which are merely to facilitate and simplify the description of the embodiments of the present application, rather than to indicate or imply that the referenced apparatuses or elements must have a particular orientation, or be constructed and operated in a particular orientation. Accordingly, no limitations are intended to the embodiments of the present application.

In the field of new energies, a power battery may be used as a main power source of an electric device (such as a vehicle, a ship, a spacecraft, and the like), and an energy storage battery may be used as a charging source of the electric device. The importance of both the power battery and the energy storage battery is self-evident. As an example but not as a limitation, in some application scenarios, the power battery may be a battery in the electric device, and the energy storage battery may be a battery in a charging device. For convenience of description, the power battery and the energy storage battery may be generally referred to as a battery in the following description.

As described in the background, with the development of new energy technology, the demand for the power battery and the energy density of an interior of the power battery have increased concurrently. For a long time in the future, with the increase of the energy intensity of the battery, the thermal runaway risk will be in an upward trend. When performing the early warning of the thermal runaway of a battery in the related art, a temperature sensor and the like arranged in a battery compartment is typically used to perform the measurement of early feature parameters of the thermal runaway, and then the battery thermal runaway warning may be performed according to obtained feature parameters in combination with an evidence theory model.

In the process of designing and developing a battery, the inventors of the present application explored and found that the thermal runaway of the cell originates from the interior of the cell at first, and the heat of the interior of the cell will be thermally diffused from the inside to the outside along the cell, and thus the temperature of the surface of the cell differs from the temperature of the interior of the cell greatly. In view of this, the solution of the related art only detects the temperature in the battery compartment through the temperature sensor, which has a relatively large detection error, and then the thermal runaway warning lags severely.

In order to solve the above-mentioned technical problem, the inventors of the present application has designed a battery thermal runaway warning solution based on a sensor arranged in a cell, in which a cell module including at least one cell, a first collecting module including at least one first collecting unit, and a data processing module are arranged in a battery pack. Furthermore, since the first collecting unit is arranged at an interior of the cell, the first operation data in the cell can be directly collected by the first collecting unit, and then the data processing module performs a thermal runaway detection on the cell based on the first operation data to obtain a first detection result. Thus a direct collection of operation data of the interior of the cell is achieved, which reflects an operation condition of the interior of the cell more realistically. The thermal runaway detection achieved thereby is a thermal runaway detection solution with high accuracy and sensitivity, which reduces the technical problem in the related art that the thermal runaway warning severely lags. In addition, compared to a solution in which an internal condition is estimated according to externally collected signals in combination with an algorithm model, the present solution has less errors and higher accuracy, and can leave more time for subsequent thermal management and thermal runaway warning notification.

Hereinafter, a battery pack, an electric apparatus, a method for detecting a battery pack, and a computer storage medium according to the embodiments of the present application will be described below. First, the battery pack according to the embodiments of the present application will be described below.

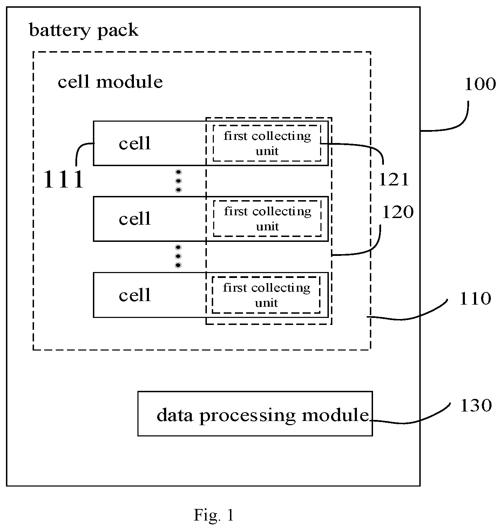

Referring to Fig. 1, Fig. 1 shows a schematic structural module diagram of an optional embodiment of a battery pack 100 according to the embodiments of the present application. In this embodiment, the battery pack 100 may include a cell module 110, a first collecting module 120, and a data processing module 130.

The cell module 110 may include at least one cell 111.

The first collecting module 120 may include at least one first collecting unit 121. The first collecting unit 121 may be arranged in the cell 111 and configured to collect first operation data of the cell 111.

The data processing module 130 is connected with the first collecting unit 121 and configured to perform a thermal runaway detection on the cell 111 based on the first operation data to obtain a first detection result.

In the battery pack 100 according to the embodiments of the present application, by arranging a cell module 110 including at least one cell 111, a first collecting module 120 including at least one first collecting unit 121, and a data processing module 130 connected with the first collecting unit 121, the data processing module 130 can perform a thermal runaway detection on the cell 111 based on the first operation data collected by the first collecting unit 121 to obtain the first detection result eventually. Furthermore, since the first collecting unit 121 is arranged at an interior of the cell 111, the first operation data in the cell 111 can be directly collected by the first collecting unit 121, and then the data processing module 130 performs a thermal runaway detection on the cell 111 based on the first operation data to obtain a first detection result. Thus a direct collection of operation data of the interior of the cell 111 is achieved, which reflects an operation condition of the interior of the cell 111 more realistically. The thermal runaway detection achieved thereby is a thermal runaway detection solution with high accuracy and sensitivity, which reduces the technical problem in the related art that the thermal runaway warning severely lags. In addition, compared to a solution in which an internal condition is estimated according to externally collected signals in combination with an algorithm model, the present solution has less errors and higher accuracy, and can leave more time for subsequent thermal management and thermal runaway warning notification.

The battery pack 100 may include at least one cell 111 and at least one first collecting unit 121. The first collecting unit 121 may correspond to the cell 111, and may be arranged in a corresponding cell 111. Herein, the cell 111 may be a hard shell cell, a soft package cell, a laminated cell or a cylindrical cell.

Each first collecting unit 121 may include one or more collecting elements, and each of the collecting elements is arranged in the cell 111. The collecting element may be a sensor or other collecting elements for collecting the first operation data. Exemplarily, the first collecting unit 121 may at least include a temperature collecting unit, and in other examples, may further include a pressure collecting unit, a gas collecting unit, and a gas pressure collecting unit, etc. These collecting elements have strong corrosion resistance performance, and are thus suitable for a stable arrangement at the interior of the cell 111.

The data processing module 130 may be a BMS (Battery Management System), and may also be a chip dedicated for a thermal runaway risk warning. The data processing module 130 may be electrically connected with the first collecting unit 121 through a conductive line. Exemplarily, after the first collecting unit 121 performs signal collecting, the first collecting unit 121 may lead out a collected signal through a respective independent conductive line, and then first operation data of the interior of the cell 111 collected by the first collecting unit 121 can be obtained through signal decoupling.

The first operation data is related to a type of the first collecting unit 121. Exemplarily, under a condition that the first collecting unit 121 includes the temperature collecting unit 310, the first operation data may include first temperature data collected by the temperature collecting unit. Under a condition that the first collecting unit 121 includes a gas collecting unit, the first operation data may include a concentration of a gas collected by the gas collecting unit.

When performing the thermal runaway warning, the data processing module 130 may determine whether any of the cells 111 in the battery pack 100 meets a thermal runaway condition based on the first operation data in combination with an operation condition of different first operation data. When any of the cells 111 meets the thermal runaway condition, the data processing module 130 may indicate a first detection result as the battery pack 100 and/or the cell 111 in the battery pack 100 which meets the thermal runaway detection condition being at risk of a thermal runaway, and in this case, the data processing module 130 can issue a level-one warning of the thermal runaway, and the personnel can evacuate timely. On the contrary, when all the cells 111 do not meet the thermal runaway detection condition, the first detection result indicates that the battery pack 100 and all the cells 111 do not meet the thermal runaway detection condition, and in this case, the data processing module 130 may trigger the first collecting module 120 to continue signal collecting.

Herein, the battery pack 100 may further include an external collecting module, and the external collecting module may be arranged outside the cell module 110, that is, the external collecting module may collect operation data in the battery compartment. The external collecting module may be activated when the first detection result indicates that the cell 111 or the battery pack 100 is at risk of a thermal runaway, and collect external operation data of the exterior of the cell 111 after activation.

The external operation data is mainly environmental data of the cells 111 in the battery compartment, and a type of the external operation data may be at least partially the same as a type of the first operation data. For example, the external operation data and the first operation data may both include temperature data. In addition, the external operation data may further include a smoke concentration, a gas pressure and a gas concentration in the battery compartment, etc.

After the external collecting module collects the external operation data of the cell 111 in the battery compartment, the external operation data may be sent to the data processing module 130 electrically connected with the external collecting module, and the data processing module 130 may perform a secondary detection on whether the battery cell 111/the battery pack 100 is at risk of a thermal runaway according to the external operation data.

Herein, when the data processing module 130 determines that the battery pack 100/the cell 111 is at risk of the thermal runaway through the secondary detection, a level-two thermal runaway warning may be activated at this time.

It should be noted that a level-one signal collecting mechanism of the interior of the cell 111 and a corresponding thermal runaway warning solution can timely reflect the problems of the interior of the cell 111, and initially respond to the thermal runaway risk in the cell 111. In addition, a secondary verification performed by the external collecting module can capture a thermal runaway risk signal spilling out from the interior of the cell 111 on the one hand, and on the other hand, can also reflect an internal signal change caused by external conditions such as external mechanical compression and high temperature, and can achieve risk warning for the thermal runaway caused by external factors.

In these embodiments, through the first-level signal collecting mechanism established by the first collecting module 120 arranged in the cell 111, in combination with the secondary verification of the external collecting module, the first operation data collected from the interior and the external operation data collected from the exterior can supplement and verify each other, the accuracy of the detection and state judgment of the interior and the exterior of the cell 111 and the battery pack 100 is improved, and a misjudgment caused by a single signal collecting module performing a warning judgment can be overcome. In addition, the second collecting module is activated only when the first detection result indicates that the cell 111/the battery pack 100 is at risk of a thermal runaway, this discontinuous operation state can avoid invalid operation, and the actual operation life of the external collecting module may be greatly increased.

In some embodiments, when the secondary detection of the thermal runaway risk is performed using the external operational data, if the detection result is normal, the secondary detection may be continued until the level-one thermal runaway warning is released. It should be noted that when the first level warning occurs, it has indicated that the interior of the cell 111 was at risk of the thermal runaway, but the thermal runaway has not spilled out to the exterior of the cell 111. In this case, the thermal runaway risk can be eliminated by cooling measures such as thermal management, until various first operation data of the interior of the cell 111 return to normal, the level-one warning can be released and the secondary detection can be stopped. Thus whether the thermal runaway risk at the interior of the cell 111 spill out or not can be detected continuously, which guarantees the safety of the environment where the battery pack 100 is located.

The external collecting module may include an external temperature collecting unit, a smoke concentration collecting unit, and a gas and gas pressure collecting unit arranged at the exterior. Herein, a specific type and an abnormality judging logic of the gas and gas pressure collecting unit arranged at the exterior can be set with reference to the gas and gas pressure collecting unit arranged at the interior of the cell 111, which is not repeated herein.

When an external gas generation abnormality is found through the gas and gas pressure collecting unit arranged at the exterior, the data processing module 130 may acquire the second temperature data collected by the external temperature collecting unit, and when the second temperature data is greater than a corresponding temperature threshold, a level-two alarm of a gas generation thermal runaway can be issued to increase a risk level of the thermal runaway. Otherwise, a level-two alarm of a gas generation abnormality can be issued to increase a risk level of the gas generation abnormality.

The smoke concentration collecting units can be distributed in the cell module 110 and at other positions in the battery pack 100 apart from the cell module 110, and can detect smoke concentrations in the module and the battery pack 100, and then compare the smoke concentrations with respective smoke concentration warning values. When any of the smoke concentrations exceeds a corresponding smoke concentration warning value, the data processing module 130 can send a level-two warning signal of a thermal runaway smoke of the cell 111, which increases the risk level of the thermal runaway, and simultaneously inform surrounding people of a risk of smoke inhalation, etc.

The external temperature collecting units may also be distributed in the cell module 110 and at other positions in the battery pack 100 apart from the cell module 110, and can detect the temperature of the module and the temperature in the battery pack 100. When any of the temperatures exceeds a temperature warning value, the data processing module 130 can send a level-two warning signal of a thermal runaway and thereby increase the risk level of the thermal runaway.

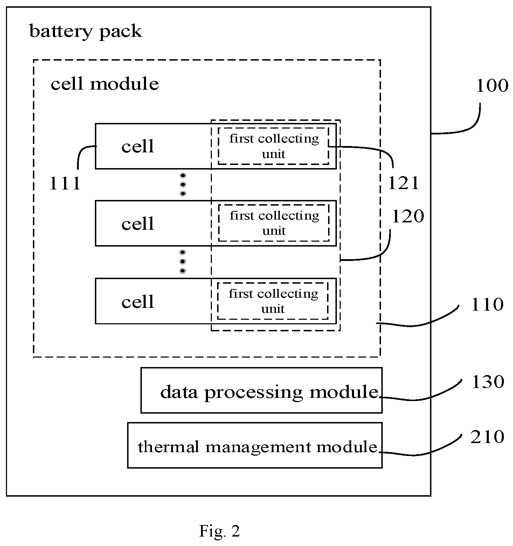

Referring to Fig. 2, another embodiment of the present application is proposed based on the embodiment described above, in which the battery pack 100 may further include a thermal management module 210 which may be connected with the data processing module 130.When the first detection result indicates that any of the cells 111 is at risk of a thermal runaway, the thermal management module 210 may balance a temperature of the cell 111.

When the obtained first detection result indicates that any of the cells 111 is at risk of a thermal runaway, the thermal management module 210 may be adjusted so as to realize temperature management and control to decrease the temperature of the interior of the cell 111. Simultaneously, the first collecting module 120 in the cell 111 may continue to collect the first operation data so as to determine whether the level-one warning can be released through a cooling solution of the thermal management module 210.

The measures for the thermal management module 210 to balance the temperature of the cell 111 may be designed according to actual needs in combination with the related art prior to the filing date of the present application, which is not repeated herein. The embodiments of the present application mainly emphasize the time for the thermal management module 210 to balance the temperature of cell 111.

In these embodiments, the thermal management module 210 may balance the temperature of the cell 111 after a level-one warning is generated (i.e., after the first detection result indicates that any cell 111 is at risk of the thermal runaway), which can lower the temperature of the cell 111 in advance compared to the related art, so as to reduce the thermal runaway risk of the cell 111, and improve safety of usage of the cell 111.

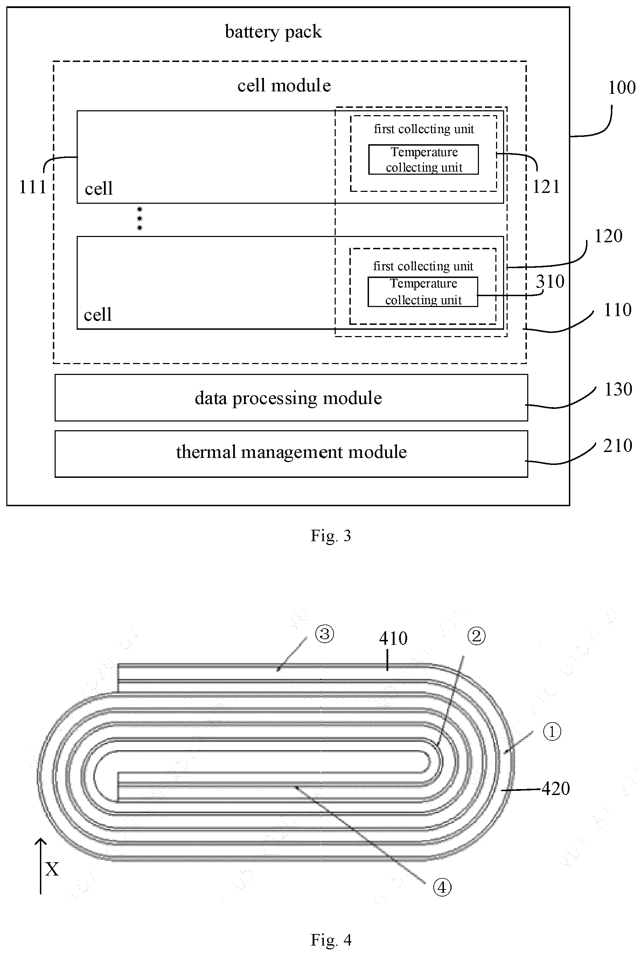

Referring to Fig. 3, yet another embodiment of the present application is proposed based on the above-described embodiment, in which the first collecting unit 121 may include a temperature collecting unit 310.

The temperature collecting unit 310 may be configured to collect first temperature data of the cell 111, and the first operation data includes the first temperature data.

The data processing module 130 may obtain the first temperature data collected by the temperature collecting unit 310 through an electrically connected conductive line. The data processing module 130 may then perform a thermal runaway detection on the cell 111 through the first temperature data. When the first temperature data meets a temperature runaway condition, the data processing module 130 may indicate the first detection result as the cell 111 being at risk of the thermal runaway, and at this time, activate a level-one warning of the thermal runaway.

The above-described temperature collecting unit 310 may be a temperature sensor, or other temperature collecting device for collecting a temperature. A type of the above-described temperature sensor may be one or more of a fiber optic sensor, a bimetallic thermometer, a liquid-in-glass thermometer, a pressure thermometer, a resistance thermometer, a thermistor, and a thermocouple. The above-described temperature collecting units 310 may be attached to an electrode plate in an array, and the attachment positions of the temperature collecting units 310 may be set according to actual needs.

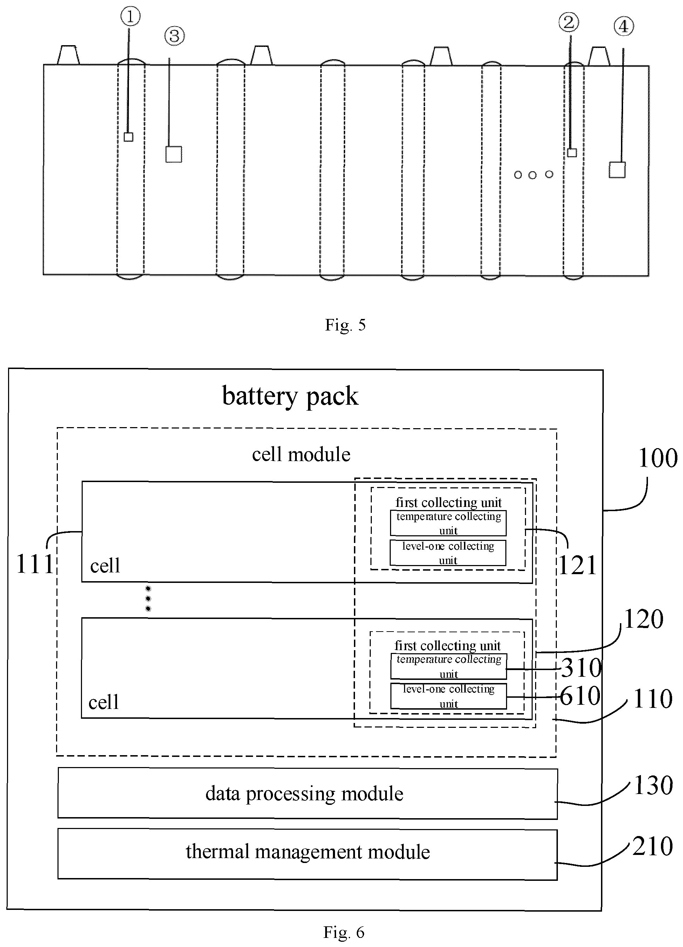

It should be noted that the cell 111 involved above may include a bare cell which is accommodated in an accommodation space formed by a top cover and a case. A separator and electrode plates may be wound to form the bare cell. Exemplarily, referring to Fig. 3 to Fig. 5, in which Fig. 4 and Fig. 5 show schematic diagrams of optional distribution positions (i.e. positions labeled by ① to ④) of the temperature collecting units 310 under a condition that the electrode plate in the cell 111 are in a wound structure. The electrode plate may be an anode electrode plate, the electrode plate may be wound around a winding axis to form a wound structure. The electrode plate may include a plurality of straight portions 410 and a plurality of bent portions 420, the plurality of straight portions 410 may be stacked in a first direction, the plurality of bent portions 420 are at least partially bent in an arc shape and connect two adjacent straight portions 410 of the plurality of straight portions 410, and the first direction X is perpendicular to the winding axis. The temperature collecting unit 310 is attached to the straight portion 410 and/or the bent portion 420.

The temperature collecting unit 310 may be attached to the bent portion 420 of an outermost/innermost electrode plate in the cell 111, or the straight portion 410 of the outermost/innermost electrode plate in the cell 111. Of course, the temperature collecting unit 310 may be attached to a middle electrode plate.

The first temperature data meeting the temperature runaway condition may represent that the first temperature data exceeds the temperature threshold, that is, when the first temperature data exceeds the temperature threshold, the first detection result indicates that the cell 111 is at risk of the thermal runaway; on the contrary, when the first temperature data does not exceed the temperature threshold, the first detection result indicates that the cell 111 is not at risk of the thermal runaway.

It should also be noted that, when the temperature collecting units 310 are arranged at a plurality of positions, the temperature thresholds at corresponding positions may be different, and thus the difference in temperatures at the positions in the cell 111 is taken into consideration.

In these embodiments, an optional thermal runaway warning solution in which the temperature collecting unit 310 is arranged in the cell 111 is provided, which helps to provide a thermal runaway detection solution with high accuracy and sensitivity, helps to achieve a battery thermal runaway management as early as possible, and improves the accuracy of a thermal runaway warning. The solution can leave more time for subsequent thermal management and thermal runaway warning notification, and reduce the technical problem in the related art that the thermal runaway warning severely lags.

Referring to Fig. 6, yet another embodiment of the present application is proposed based on the embodiment described above, in which the first collecting unit 121 may further include a level-one collecting unit 610 in addition to the temperature collecting unit 310.

The level-one collecting unit 610 may be configured to collect second operation data of the cell 111 other than the first temperature data, and the first operation data may also include the second operation data.

After the level-one collecting unit 610 collects the second operation data of the cell 111, the data processing module 130 may obtain the second operation data collected by the level-one collecting unit 610 via a conductive line, and when the second operation data meets a corresponding type of data detection condition, perform a thermal runaway detection on the cell 111 through the first temperature data.

The main difference between this embodiment and the previous embodiments is that a level-one collecting unit 610 and a data detection condition corresponding to a different data type are added, and the added level-one collecting unit 610 may be set based on causes or principles of different thermal runaway phenomena occurring in the cell 111.

For example, the thermal runaway risk may be caused by an excessively high gas concentration generated in the cell 111, then the level-one collecting unit 610 may perform a gas and gas pressure concentration detection to obtain the second operation data, so that the data processing module 130 may judge whether the second operation data meets a gas and gas pressure concentration type of data detection condition.

The data detection condition is a detection condition that the second operation data reaches an abnormal phenomenon related to the thermal runaway, and when the second operation data meets a corresponding type of data detection condition, the thermal runaway detection on the cell 111 can be achieved through the first temperature data collected by the temperature collecting unit 310.

In these embodiments, before the thermal runaway detection is performed on the cell 111 based on the first temperature data, a data detection condition judgment by the second operation data can be added, possible abnormalities of the temperature collecting unit 310 can be excluded, the accuracy of the thermal runaway detection of the cell 111 can be improved, and meanwhile a reference basis can be provided to find the root cause of the thermal runaway of the cell 111.

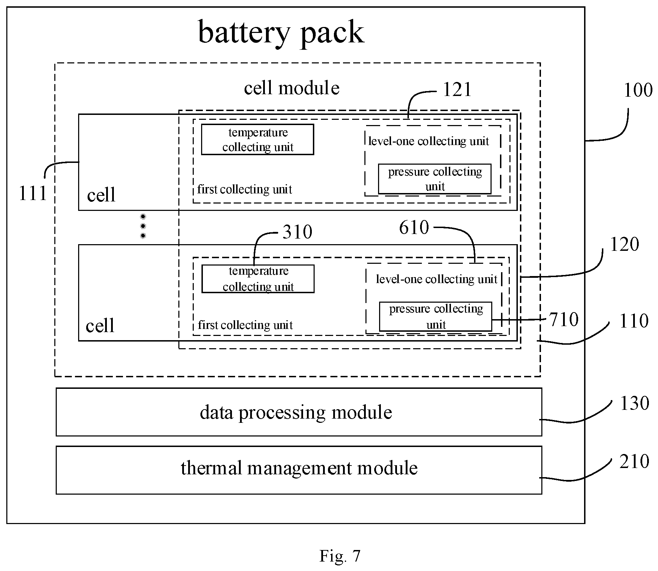

Referring to Fig. 7 in conjunction with Fig. 4 to Fig. 5, yet another embodiment of the battery pack 100 of the present application is proposed based on the embodiment described above, in which the level-one collecting unit 610 may include a pressure collecting unit 710.

The pressure collecting unit 710 may correspond to the temperature collecting unit 310, the pressure collecting unit 710 may be attached to the straight portion 410 and/or the bent portion 420 shown in Fig. 4 and Fig. 5, the pressure collecting unit 710 may collect pressure data of the cell 111, and the second operation data includes the pressure data. Herein, when the pressure data is greater than a pressure threshold, the second operation data meets a corresponding pressure type of data detection condition.

The pressure collecting unit 710 may be a pressure sensor or other collecting device for acquiring pressure data. A type of the pressure sensor may include at least one of a strain gauge piezoresistive type, an electromagnetic type, a capacitive type, a piezoelectric type, an electrostatic capacity type, and a vibrating wire type.

A thickness of the pressure collecting unit 710 is generally less than 10 µm, and these pressure collecting units 710 may be encapsulated and fixed on the electrode plate through encapsulating adhesives. In some embodiments, under a condition that the pressure collecting unit 710 is attached to the straight portion 410, an effective area of the pressure collecting unit 710 may be within a range of 1cm*1cm, and under a condition that the pressure collecting unit 710 is attached to the bent portion 420, an effective area of the pressure collecting unit 710 may be within a range of 0.5cm*0.5cm.

In some examples, the pressure collecting unit 710 may be arranged next to the temperature collecting unit 310. Before the cell 111 leaves the factory, the temperature collecting unit 310 and the pressure collecting unit 710 may be uniformly encapsulated with battery adhesives to form a temperature and pressure collecting array, which may be of a thin film type and have good flexibility, and thus be suitable for arrangement at different positions in the cell 111.

Still referring to Fig. 7 in conjunction with Fig. 4, the pressure collecting unit 710 may be arranged at the straight portion 410 and/or the bent portion 420 of an innermost/outermost electrode plate of the cell 111, or at some positions on an inner surface of the case of the cell 111. In other examples, the pressure collecting unit 710 may also be arranged on a middle electrode plate.

For illustration, the pressure collecting units 710 may be arranged on the straight portion 410 of the innermost electrode plate of the cell 111, the bent portion 420 of the outermost electrode plate of the cell 111, and the inner surface of the case of the cell 111. In this case, the pressure data measured on the straight portion 410 of the innermost electrode plate of the cell 111 is first pressure data P1, the pressure data measured on the bent portion 420 of the outermost electrode plate of the cell 111 is second pressure data P2, and the pressure data measured on the inner surface of the case of the cell 111 is third pressure data P3.

Under a condition that any of the first pressure data P1 to the third pressure data P3 is greater than a corresponding pressure threshold, it can be considered that the second operation data meets a corresponding pressure data type of data detection condition, and it can be judged whether the first temperature data meets the temperature runaway condition.

Under a condition that all of the first pressure data Pl to third pressure data P3 are not greater than the corresponding pressure threshold, detection may be continued by the pressure collecting unit 710.

In these embodiments, a situation is considered in which an excessive pressure of the interior of the cell 111 causes a temperature of the interior of the cell 111 to increase, and then a thermal runaway occurs. A level-one warning of a local pressure thermal runaway can be achieved by means of a combination of the pressure collecting unit 710 and the temperature collecting unit 310 arranged at the interior, and on basis of performing a thermal runaway risk evaluation, the root causes of the thermal runaway of the interior of the cell 111 are found, and a reference is provided for subsequent thermal runaway analysis and detection.

Still referring to Fig. 7, based on the embodiment described above, yet another embodiment of the battery pack 100 of the present application is proposed, in which the data processing module 130 may also be configured to, when the pressure data is greater than the pressure threshold and the first temperature data does not meet the temperature runaway condition, indicate the first detection result as the cell 111 being under an abnormal pressure.

It should be noted that when the pressure data at a certain position in the cell 111 is greater than a corresponding pressure threshold value at the position, it may indicate that a local abnormal pressure occurs at the interior of the cell 111, but the abnormal pressure phenomenon does not cause the temperature of the interior of the cell 111 to increase, and thus a thermal runaway risk caused thereby does not exist. In this case, the data processing module 130 may consider the first detection result as the cell 111 being under a local abnormal pressure, and issue a level-one alarm of a local abnormal pressure.

In these embodiments, the data processing module 130 performs an analysis on the case of the excessive pressure of the cell 111, determines a thermal runaway caused by a local abnormal pressure or the local abnormal pressure, and achieves an accurate abnormality analysis on the excessive pressure of the interior of the cell 111.

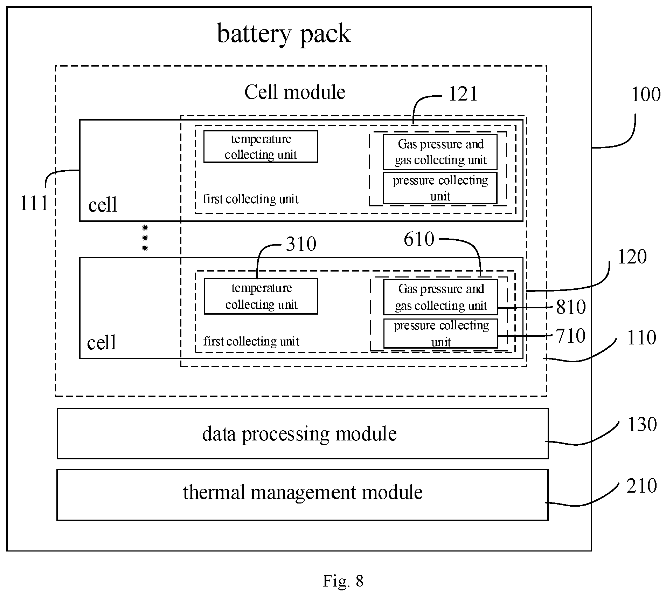

Referring to Fig. 8, based on the embodiment described above, yet another embodiment of the battery pack 100 of the present application is proposed, in which the level-one collecting unit 610 may include a gas pressure and gas collecting unit 810.

The gas pressure and gas collecting unit 810 may be arranged between the top cover and the bare cell and configured to collect gas pressure data and at least one type of gas concentration in the case. Herein, when the gas pressure data is greater than a gas pressure threshold, and any type of gas concentration is greater than a corresponding type of concentration threshold, it is determined that the second operation data meets the corresponding type of data detection condition.

It should be noted that, when the temperature of the interior of the cell 111 increases, a side reaction of the electrolyte and the active material occurs rapidly to generate a large amount of explosive gases (e.g. hydrogen, carbon monoxide), volatile organic compounds (VOC), and carbon dioxide, and the gas pressure increases rapidly at this time, which may easily cause a thermal runaway phenomenon. By arranging the gas pressure and gas collecting unit 810 at the interior of the cell 111, whether the phenomenon of a large amount of gas generation occurs in the cell can be detected well, and then, in combination with a change in the first temperature data, an accurate judgment of the thermal runaway of the cell 111 caused by the gas generation abnormality is achieved.

The gas pressure and gas collecting unit 810 may be divided into a gas collecting unit and a gas pressure collecting unit. Herein, the gas collecting unit may include a semiconductor gas sensor sensitive to various types of gases, or the gas collecting unit may be a gas sensor array made by integrating the semiconductor gas sensors. The gas pressure collecting unit may be a gas pressure sensor or others, and a type of the gas pressure sensor may include one or more of a strain gauge piezoresistive type, an electromagnetic type, a capacitive type, a piezoelectric type, an electrostatic capacity type and a vibrating wire type.

The type of the gas sensors described above may include a variety of types, and after integration into the gas sensor array, detection of contents of a variety of different components can be achieved while space is also saved. The gas sensor can be configured to detect a gas that may disable gas generation of the cell 111, such as hydrogen, carbon monoxide, carbon dioxide, and the like, and can also be configured to detect an organic compound having a relatively great volatility due to influence of the temperature. Exemplarily, the volatile organic compound may include methane, ethylene, etc.

Exemplarily, the gas collecting unit can detect gas concentrations of hydrogen, carbon monoxide, carbon dioxide, and VOC in the cell 111, while the gas pressure collecting unit may collect the gas pressure in the cell 111. When a total gas pressure in the cell 111 is not greater than the gas pressure threshold, or all types of the gas concentrations are less than or equal to a corresponding type of gas concentration threshold, the gas generation in the cell 111 is normal at this moment, and detection of the gas pressure and gas concentration can be continued.

When the total gas pressure in the cell 111 is greater than the gas pressure threshold, and any type of the gas concentrations is greater than a corresponding type of gas concentration threshold, it is considered that the gas generation in the cell 111 is abnormal. It may be further checked whether the first temperature data is greater than the temperature threshold. When the first temperature data is greater than the temperature threshold, it is considered that the interior of the cell 111 is at risk of a thermal runaway due to a gas generation abnormality, otherwise, it is considered that a gas generation abnormality occurs in the cell 111, and a level-one alarm of the gas generation abnormality in the cell 111 can be issued.

It should also be noted that the above-described various types of gas concentration thresholds may be set according to an actual effect of the gas concentration on the thermal runaway, and the various types of gas concentration thresholds may be the same or different.

In some other embodiments, a pressure of each gas may be obtained (Pᵢ=P*yᵢ) from the gas concentration and the total gas pressure, in which P is the gas pressure in the cell 111, y is the type i of gas concentration. In conjunction with a pressure threshold corresponding to each gas, it may be judged whether the gas generation in the cell 111 is abnormal.

Still referring to Fig. 8, based on the embodiment described above, yet another embodiment of the battery pack 100 of the present application is proposed , in which the data processing module 130 is further configured to, when the gas pressure data is greater than the gas pressure threshold, the first temperature data does not meet the temperature runaway condition, and any type of gas concentration is greater than the corresponding type of concentration threshold, indicate the first detection result as a gas generation abnormality of the cell 111.

Herein, under a condition that the first temperature data does not meet the temperature runaway condition, it indicates that the interior of the cell 111 does not reach a condition of a thermal runaway risk warning caused by the gas generation abnormality, but the gas generation abnormality occurs. Therefore, a thermal runaway caused by gas generation or a gas generation abnormality is determined, an accurate abnormality analysis of the gas generation at the interior of the cell 111 is achieved, and then the reason why the thermal runaway is generated is found, and a favorable reference for the subsequent detection and analysis of the thermal runaway of the cell 111 can be provided.

It should be noted that there is a flammable gas detection solution in the related art, in which the flammable gas to be detected is a gas spilling out to the battery compartment, which actually spills out under a condition that the gas in the cell 111 accumulates to such an amount that the gas pressure has reached a limit to break through an explosion proof valve. Thus there is a risk of detection and warning lag in the related art, which reduces the time for personnel evacuation and disposal. In addition, the flammable gas to be detected is mainly a VOC gas. Therefore, compared to the related art, in these embodiments, by arranging the gas and gas pressure collecting unit 810 at the interior of the cell 111, and detecting concentrations of various types of gases such as carbon monoxide, carbon dioxide and methane, the thermal runaway warning solution can be more reliable, and the scope of thermal runaway risk warning is increased, so as to help to reduce errors.

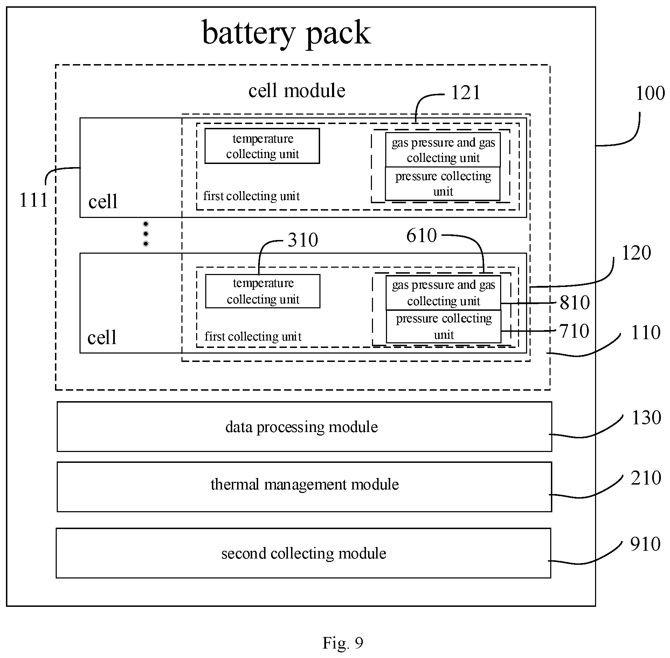

Referring to Fig. 9, based on the embodiment described above, yet another embodiment of the battery pack 100 of the present application is proposed, in which the battery pack 100 may also include a second collecting module 910.

The second collecting module 910 may be connected with the data processing module 130, and the second collecting module 910 may be configured to collect electrical data of the cell 111. The electrical data includes at least one of a voltage value and a current value of a loop where the cell 111 is located and an insulation resistance value of the cell 111.

The electrical data is also included in the second operation data, whether the second operation data meets an electrical type of data detection condition may be judged according to at least one of the electrical data. The electrical type of data detection condition may include an insulation resistance value being less than a resistance threshold, a current value of a loop where the cell 111 is located being greater than a current threshold, or a dropping rate of the voltage value of the loop where the cell 111 is located being greater than a rate threshold. That is, under a condition that at least one of the insulation resistance value, the dropping rate of the voltage value, and the current value satisfies the condition, the second operation data meets the electrical type of data detection condition.

It should be noted that under a condition that the electrical type of data detection condition is satisfied, it indicates that a short circuit or a severe self-discharge may occur in the loop where the cell 111 is located, which may easily cause the thermal runaway risk. It is necessary to further consider whether the first temperature data meets the temperature runaway condition, so as to determine whether the cell 111 is in a short circuit abnormality or at risk of the thermal runaway due to the short circuit of the loop.

In these examples, a thermal runaway risk caused by electrical reasons of the cell 111 is considered, and the root cause of the thermal runaway at the interior of the cell 111 is found to provide a reference for the subsequent analysis and detection of the thermal runaway.

Still referring to Fig. 9, based on the embodiment described above, yet another embodiment of the battery pack 100 of the present application is proposed, in which the data processing module 130 may also be configured to indicate the first detection result as a short circuit abnormality of the cell 111 when it is determined based on the electrical data that the second operation data meets the corresponding type of data detection condition and the first temperature data does not meet the temperature runaway condition.

In this embodiment, after the judgment of the electrical data, whether the first temperature data meets the temperature runaway condition is determined, whether the short circuit abnormality of the cell 111 causes the cell 111 to be at risk of the thermal runaway can be determined, and an accurate abnormality analysis of a short circuit of the cell 111 is achieved.

In these embodiments, a level-one signal collecting system is constructed based on a combination of the electrical data, the gas generation, and the pressure of the interior of the cell 111, and then a judgment about whether the first temperature data meets the temperature runaway condition is triggered, and from various root causes of the thermal runaway, the causes of the thermal runaway can be found thoroughly while the warning of the thermal runaway risk is achieved.

In the foregoing description, a battery pack according to the embodiments of the present application is described in detail with reference to Fig. 1 to Fig. 9. On basis of this, the embodiments of the present application also protect an electric apparatus including the battery pack according to the above-mentioned embodiments, so that the electric apparatus has all the beneficial effects of the battery pack.

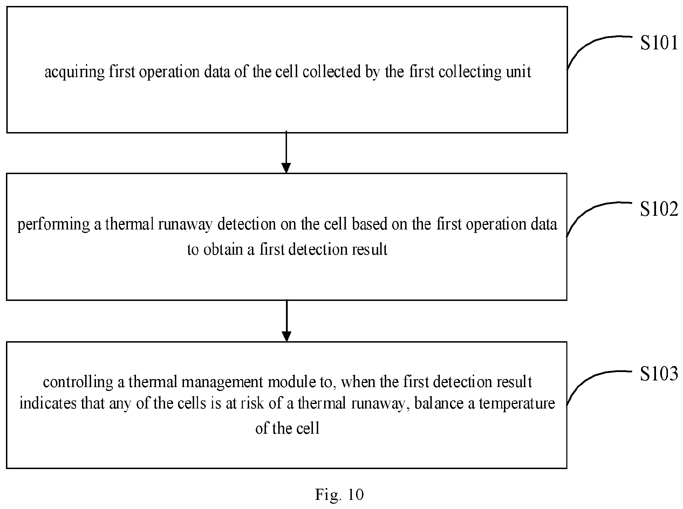

Referring to Fig. 10, based on the battery pack of the embodiments described above, the embodiment of the present application also provides a method for detecting a battery pack. The method is applied to a data processing module, the battery pack may include a cell module and a first collecting module, the cell module may include at least one cell, the first collecting module may include at least one first collecting unit, the first collecting unit is arranged in the cell, and the method includes:
S101, acquiring first operation data of the cell collected by the first collecting unit;
S102, performing a thermal runaway detection on the cell based on the first operation data to obtain a first detection result.

In the embodiments of the present application, the cell module include at least one cell, the first collecting module includes at least one first collecting unit, the data processing module can perform a thermal runaway detection on the cell based on the first operation data collected by the first collecting unit to obtain a first detection result. Furthermore, since the first collecting unit is arranged at an interior of the cell, the first operation data in the cell can be directly collected by the first collecting unit, and then the data processing module performs a thermal runaway detection on the cell based on the first operation data to obtain a first detection result. Thus a direct collection of operation data of the interior of the cell is achieved, which reflects an operation condition of the interior of the cell more realistically. The thermal runaway detection achieved thereby is a thermal runaway detection solution with high accuracy and sensitivity, which reduces the technical problem in the related art that the thermal runaway warning severely lags. In addition, compared to a solution in which an internal condition is estimated according to externally collected signals in combination with an algorithm model, the present solution has less errors and higher accuracy, and can leave more time for subsequent thermal management and thermal runaway warning notification.

Referring to Fig. 10, based on the embodiment described above, another embodiment of the method for detecting a battery pack of the present application is proposed, and in this embodiment, after S102, the method further includes:
S103, controlling a thermal management module to balance a temperature of the cell when the first detection result indicates that any cell is at risk of a thermal runaway.

In these embodiments, the thermal management module may balance the temperature of the cell after a level-one warning is generated (i.e., after the first detection result indicates that any cell is at risk of the thermal runaway), which can lower the temperature of the cell in advance compared to the related art, so as to reduce the thermal runaway risk of the cell, and improve safety of usage of the cell.

Based on the embodiment described above, yet another embodiment of the method for detecting a battery pack of the present application is proposed, in which the first collecting unit includes a temperature collecting unit and a level-one collecting unit.

Herein, performing the thermal runaway detection on the cell based on the first operation data to obtain the first detection result may include: acquiring second operation data collected by the level-one collecting unit and first temperature data collected by the temperature collecting unit, the first operation data including the second operation data and the first temperature data; and performing, when the second operation data meets a corresponding type of data detection condition, the thermal runaway detection on the cell through the first temperature data.

The second operation data may be set with reference to the foregoing description. In these embodiments, a level-one signal collecting system can be constructed based on the second operation data like the electrical data, the gas generation, and the pressure of the interior of the cell, and then a judgment about whether the first temperature data meets the temperature runaway condition is triggered, and from various root causes of the thermal runaway, the causes of the thermal runaway can be found thoroughly while the warning of the thermal runaway risk is achieved.

In addition, in combination with the method for detecting a battery pack in the embodiments described above, the embodiments of the present application may provide a computer storage medium for implementation. The computer storage medium has computer program instructions stored on; and when the computer program instructions are executed by a processor, the method for detecting a battery pack according to any of the embodiments described above is implemented.

In addition, the embodiments of the present application also provide a computer program product including a computer program which, when executed by a processor, may implement steps and corresponding contents of the method embodiments previously described.

Although the present application has been described with reference to the preferred embodiments, various modifications can be made thereto and components thereof can be replaced without departing from the scope of the appended claims. In particular, various technical features described in various embodiments can be combined in any manner as long as there is no structural conflict. The present application is not limited to the specific embodiments described herein, and includes all technical solutions that fall within the scope of the claims.

## Claims

1. A battery pack (100) comprising:
a cell module (110) including at least one cell (111);
a first collecting module (120) including at least one first collecting unit (121), the first collecting unit (121) being arranged in the cell (111) and being configured to collect first operation data of the cell (111); and
a data processing module (130) connected with the first collecting unit (121) and configured to perform a thermal runaway detection on the cell (111) based on the first operation data to obtain a first detection result, wherein
the first collecting unit (121) comprises a temperature collecting unit (310) configured to collect first temperature data of the cell (111), the first operation data comprising the first temperature data; and
the data processing module (130) is configured to perform the thermal runaway detection on the cell (111) through the first temperature data, and when the first temperature data meets a temperature runaway condition, obtain the first detection result as the cell (111) being at risk of the thermal runaway, wherein
the first collecting unit (121) further comprises a level-one collecting unit (610);
the level-one collecting unit (610) is configured to collect second operation data other than the first temperature data of the cell (111), and the first operation data comprises the second operation data;
**characterised in that**
the data processing module (130) is configured to perform the thermal runaway detection on the cell (111) through the first temperature data when the second operation data meets a corresponding type of data detection condition.

2. The battery pack (100) according to claim 1, wherein the battery pack (100) further comprises:
a thermal management module (210) connected with the data processing module (130) and configured to, under a condition that the first detection result indicates that any of the at least one cell (111) is at risk of a thermal runaway, balance a temperature of the cell (111).

3. The battery pack (100) according to claim 1 or 2, wherein:
the cell (111) comprises an electrode plate wound around a winding axis to form a wound structure, wherein the electrode plate comprises a plurality of straight portions (410) and a plurality of bent portions (420), the plurality of straight portions are stacked in a first direction (X), the plurality of bent portions (420) are at least partially bent in an arc shape and connect two adjacent straight portions (410) of the plurality of straight portions (410), and the first direction (X) is perpendicular to the winding axis; and
the level-one collecting unit (610) comprises:
a pressure collecting unit (710) corresponding to the temperature collecting unit (310), the pressure collecting unit (710) being attached to the straight portion (410) and/or the bent portion (420) and configured to collect pressure data of the cell (11), the second operation data comprising the pressure data;
wherein under a condition that the pressure data is greater than a pressure threshold, the second operation data meets the corresponding type of data detection condition.

4. The battery pack (100) according to claim 3, wherein the data processing module (130) is further configured to, under a condition that the pressure data is greater than the pressure threshold and the first temperature data does not meet the temperature runaway condition, indicate the first detection result as the cell being under an abnormal pressure.

5. The battery pack (100) according to any one of claims 1 to 4, wherein:
the cell (111) comprises a bare cell, a case, and a top cover, the bare cell being accommodated in an accommodation space enclosed by the case and the top cover; and
the level-one collecting unit (610) comprises: a gas pressure and gas collecting unit (810) arranged between the top cover and the bare cell and configured to collect gas pressure data and at least one type of gas concentration in the case, wherein under a condition that the gas pressure data is greater than a gas pressure threshold and any of the at least one type of gas concentration is greater than a corresponding type of concentration threshold, the second operation data meets the corresponding type of data detection condition.

6. The battery pack (100) according to claim 5, wherein the data processing module (130) is further configured to indicate the first detection result as a gas generation abnormality of the cell (111) under a condition that the gas pressure data is greater than the gas pressure threshold, the first temperature data does not meet the temperature runaway condition, and any of the at least one type of gas concentration is greater than the corresponding type of concentration threshold.

7. The battery pack (100) according to any one of claims 1 to 6, wherein the battery pack (100) further comprises: a second collecting module (910) configured to collect electrical data of the cell, the electrical data comprising at least one of a voltage value and a current value of a loop where the cell is located and an insulation resistance value of the cell; and
wherein under a condition that the insulation resistance value is less than a resistance threshold, the current value is greater than a current threshold, or a dropping rate of the voltage value is greater than a rate threshold, the second operation data meets the corresponding type of data detection condition.

8. The battery pack (100) according to claim 7, wherein the data processing module (130) is further configured to indicate the first detection result as a short circuit abnormality of the cell under a condition that it is determined based on the electrical data that the second operation data meets the corresponding type of data detection condition and the first temperature data does not meet the temperature runaway condition.

9. An electric apparatus comprising the battery pack (100) according to any one of claims 1 to 8.

10. A method for detecting a battery pack, the method being applied to a data processing module, the battery pack comprising a cell module and a first collecting module, the cell module comprising at least one cell, the first collecting module comprising at least one first collecting unit, a temperature collecting unit, and a level-one collecting unit, the first collecting unit being arranged in the cell, and the method comprising:
acquiring (S101) first operation data of the cell collected by the first collecting unit; and
performing (S102) a thermal runaway detection on the cell based on the first operation data to obtain a first detection result, comprising:
acquiring second operation data collected by the level-one collecting unit and first temperature data collected by the temperature collecting unit, the first operation data comprising the second operation data and the first temperature data; **characterised in**
performing the thermal runaway detection on the cell through the first temperature data when the second operation data meets a corresponding type of data detection condition.

11. The method according to claim 10, wherein after obtaining the first detection result, the method further comprises:
controlling (S103) a thermal management module to, under a condition that the first detection result indicates that any of the at least one cell is at risk of a thermal runaway, balance a temperature of the cell.

12. A computer storage medium having programs or instructions stored thereon which, when executed by a processor, cause the processor to implement the method for detecting a battery pack according to any one of claims 10 to 11.

## Patentansprüche

1. Batteriepack (100), umfassend:
ein Zellenmodul (110) einschließlich mindestens einer Zelle (111);
ein erstes Erfassungsmodul (120) einschließlich mindestens einer ersten Erfassungseinheit (121), wobei die erste Erfassungseinheit (121) in der Zelle (111) angeordnet und konfiguriert ist, um erste Betriebsdaten der Zelle (111) zu erfassen; und
ein Datenverarbeitungsmodul (130), das mit der ersten Erfassungseinheit (121) verbunden und konfiguriert ist, um basierend auf den ersten Betriebsdaten eine Detektion eines thermischen Durchgehens an der Zelle (111) durchzuführen, um ein erstes Detektionsergebnis zu erhalten, wobei
die erste Erfassungseinheit (121) eine Temperaturerfassungseinheit (310) umfasst, die konfiguriert ist, um erste Temperaturdaten der Zelle (111) zu erfassen, wobei die ersten Betriebsdaten die ersten Temperaturdaten umfassen; und
das Datenverarbeitungsmodul (130) konfiguriert ist, um die Detektion eines thermischen Durchgehens an der Zelle (111) anhand der ersten Temperaturdaten durchzuführen und, wenn die ersten Temperaturdaten eine Temperatur-Durchgeh-Bedingung erfüllen, das erste Detektionsergebnis zu erhalten, wonach die Zelle (111) von einem thermischen Durchgehen bedroht ist, wobei
die erste Erfassungseinheit (121) ferner eine Erfassungseinheit (610) der ersten Ebene umfasst;
die Erfassungseinheit (610) der ersten Ebene konfiguriert ist, um zweite Betriebsdaten, die sich von den ersten Temperaturdaten der Zelle (111) unterscheiden, zu erfassen, und die ersten Betriebsdaten die zweiten Betriebsdaten umfassen; **dadurch gekennzeichnet, dass**
das Datenverarbeitungsmodul (130) konfiguriert ist, um die Detektion eines thermischen Durchgehens an der Zelle (111) anhand der ersten Temperaturdaten durchzuführen, wenn die zweiten Betriebsdaten eine entsprechende Art von Datendetektionsbedingung erfüllen.

2. Batteriepack (100) nach Anspruch 1, wobei das Batteriepack (100) ferner Folgendes umfasst:
ein Wärmemanagementmodul (210), das mit dem Datenverarbeitungsmodul (130) verbunden ist und konfiguriert ist, um unter einer Bedingung, dass das erste Detektionsergebnis anzeigt, dass eine der mindestens einen Zelle (111) von einem thermischen Durchgehen bedroht ist, eine Temperatur der Zelle (111) auszugleichen.

3. Batteriepack (100) nach Anspruch 1 oder 2, wobei:
die Zelle (111) eine Elektrodenplatte umfasst, die um eine Wickelachse gewickelt ist, um eine gewickelte Struktur zu bilden, wobei die Elektrodenplatte eine Vielzahl von geraden Abschnitten (410) und eine Vielzahl von gebogenen Abschnitten (420) umfasst, die Vielzahl von geraden Abschnitten in einer ersten Richtung (X) gestapelt sind, die Vielzahl von gebogenen Abschnitten (420) mindestens teilweise bogenförmig gebogen sind und zwei angrenzende gerade Abschnitte (410) der Vielzahl von geraden Abschnitten (410) verbinden und die erste Richtung (X) senkrecht zur Wickelachse verläuft; und
die Erfassungseinheit (610) der ersten Ebene Folgendes umfasst:
eine Druckerfassungseinheit (710), die der Temperaturerfassungseinheit (310) entspricht, wobei die Druckerfassungseinheit (710) an dem geraden Abschnitt (410) und/oder dem gebogenen Abschnitt (420) angebracht und konfiguriert ist, um Druckdaten der Zelle (11) zu erfassen, wobei die zweiten Betriebsdaten die Druckdaten umfassen;
wobei unter einer Bedingung, dass die Druckdaten größer als ein Druckschwellenwert sind, die zweiten Betriebsdaten die entsprechende Art von Datendetektionsbedingung erfüllen.

4. Batteriepack (100) nach Anspruch 3, wobei das Datenverarbeitungsmodul (130) ferner konfiguriert ist, um unter einer Bedingung, dass die Druckdaten größer als der Druckschwellenwert sind und die ersten Temperaturdaten die Temperatur-Durchgeh-Bedingung nicht erfüllen, das erste Detektionsergebnis anzuzeigen, wonach die Zelle unter einem abnormalen Druck steht.

5. Batteriepack (100) nach einem der Ansprüche 1 bis 4, wobei:
die Zelle (111) eine nackte Zelle, ein Gehäuse und eine obere Abdeckung umfasst, wobei die nackte Zelle in einem Aufnahmeraum, der von dem Gehäuse und der oberen Abdeckung umschlossen ist, aufgenommen ist; und
die Erfassungseinheit (610) der ersten Ebene Folgendes umfasst: eine Gasdruck- und Gassammeleinheit (810), die zwischen der oberen Abdeckung und der nackten Zelle angeordnet und konfiguriert ist, um Gasdruckdaten und mindestens eine Art von Gaskonzentration im Gehäuse zu erfassen, wobei unter einer Bedingung, dass die Gasdruckdaten größer als ein Gasdruckschwellenwert sind und eine der mindestens einen Art von Gaskonzentration größer als ein entsprechender Konzentrationsschwellenwert ist, die zweiten Betriebsdaten die entsprechende Art von Datendetektionsbedingung erfüllen.

6. Batteriepack (100) nach Anspruch 5, wobei das Datenverarbeitungsmodul (130) ferner konfiguriert ist, um das erste Detektionsergebnis als eine Gasbildungsanomalie der Zelle (111) anzuzeigen, unter einer Bedingung, dass die Gasdruckdaten größer als der Gasdruckschwellenwert sind, die ersten Temperaturdaten die Temperatur-Durchgeh-Bedingung nicht erfüllen und eine der mindestens einen Art von Gaskonzentrationen größer als die entsprechende Art von Konzentrationsschwellenwert ist.

7. Batteriepack (100) nach einem der Ansprüche 1 bis 6, wobei das Batteriepack (100) ferner Folgendes umfasst: ein zweites Erfassungsmodul (910), das konfiguriert ist, um elektrische Daten der Zelle zu erfassen, wobei die elektrischen Daten mindestens einen von einem Spannungswert und einem Stromwert eines Stromkreises, in dem sich die Zelle befindet, und einem Isolationswiderstandswert der Zelle umfassen; und
wobei unter einer Bedingung, dass der Isolationswiderstandswert kleiner als ein Widerstandsschwellenwert ist, der Stromwert größer als ein Stromschwellenwert ist oder eine Abfallrate des Spannungswerts größer als ein Ratenschwellenwert ist, die zweiten Betriebsdaten die entsprechende Art von Datendetektionsbedingung erfüllen.

8. Batteriepack (100) nach Anspruch 7, wobei das Datenverarbeitungsmodul (130) ferner konfiguriert ist, um das erste Detektionsergebnis als Kurzschlussanomalie der Zelle anzuzeigen, unter einer Bedingung, dass basierend auf den elektrischen Daten bestimmt wird, dass die zweiten Betriebsdaten die entsprechende Art von Datendetektionsbedingung erfüllen und die ersten Temperaturdaten nicht die Temperatur-Durchgeh-Bedingung erfüllen.

9. Elektrische Einrichtung, umfassend das Batteriepack (100) nach einem der Ansprüche 1 bis 8.

10. Verfahren zum Detektieren eines Batteriepacks, wobei das Verfahren auf ein Datenverarbeitungsmodul angewendet wird, wobei das Batteriepack ein Zellenmodul und ein erstes Erfassungsmodul umfasst, wobei das Zellenmodul mindestens eine Zelle umfasst, wobei das erste Erfassungsmodul mindestens eine erste Erfassungseinheit, eine Temperaturerfassungseinheit und eine Erfassungseinheit der ersten Ebene umfasst, wobei die erste Erfassungseinheit in der Zelle angeordnet ist, und das Verfahren Folgendes umfasst:
Aufnehmen (S101) von ersten Betriebsdaten der Zelle, die von der ersten Erfassungseinheit erfasst werden; und
Durchführen (S102) einer Detektion eines thermischen Durchgehens an der Zelle basierend auf den ersten Betriebsdaten, um ein erstes Detektionsergebnis zu erhalten, umfassend:
Aufnehmen von zweiten Betriebsdaten, die von der Erfassungseinheit der ersten Ebene erfasst werden, und von ersten Temperaturdaten, die von der Temperaturerfassungseinheit erfasst werden, wobei die ersten Betriebsdaten die zweiten Betriebsdaten und die ersten Temperaturdaten umfassen; **gekennzeichnet durch**
Durchführen der Detektion eines thermischen Durchgehens an der Zelle anhand der ersten Temperaturdaten, wenn die zweiten Betriebsdaten eine entsprechende Art von Datendetektionsbedingung erfüllen.

11. Verfahren nach Anspruch 10, wobei das Verfahren nach dem Erhalten des ersten Detektionsergebnisses ferner Folgendes umfasst:
Steuern (S103) eines Wärmemanagementmoduls, um unter einer Bedingung, dass das erste Detektionsergebnis anzeigt, dass eine der mindestens einen Zelle von einem thermischen Durchgehen bedroht ist, eine Temperatur der Zelle auszugleichen.

12. Computerspeichermedium, auf dem Programme oder Befehle gespeichert sind, die, wenn sie von einem Prozessor ausgeführt werden, den Prozessor veranlassen, das Verfahren zum Detektieren eines Batteriepacks nach einem der Ansprüche 10 bis 11 zu implementieren.

## Revendications

1. Bloc-batterie (100) comprenant :
un module de cellule (110) comprenant au moins une cellule (111) ;
un premier module de collecte (120) comprenant au moins une première unité de collecte (121), la première unité de collecte (121) étant agencée dans la cellule (111) et étant conçue pour collecter des premières données de fonctionnement de la cellule (111) ; et
un module de traitement de données (130) raccordé à la première unité de collecte (121) et conçu pour réaliser une détection d'emballement thermique sur la cellule (111) sur la base des premières données de fonctionnement pour obtenir un premier résultat de détection, dans lequel
la première unité de collecte (121) comprend une unité de collecte de température (310) conçue pour collecter des premières données de température de la cellule (111), les premières données de fonctionnement comprenant les premières données de température ; et
le module de traitement de données (130) est conçu pour réaliser la détection d'emballement thermique sur la cellule (111) par l'intermédiaire des premières données de température, et quand les premières données de température satisfont une condition d'emballement par la température, obtenir comme premier résultat de détection que la cellule (111) présente un risque d'emballement thermique, dans lequel
la première unité de collecte (121) comprend en outre une unité de collecte de niveau un (610) ;
l'unité de collecte de niveau un (610) est conçue pour collecter des deuxièmes données de fonctionnement autres que les premières données de température de la cellule (111), et les premières données de fonctionnement comprennent les deuxièmes données de fonctionnement ; **caractérisé en ce que**
le module de traitement de données (130) est conçu pour réaliser la détection d'emballement thermique sur la cellule (111) par l'intermédiaire des premières données de température quand les deuxièmes données de fonctionnement satisfont à une condition de détection du type de données correspondant.

2. Bloc-batterie (100) selon la revendication 1, le bloc-batterie (100) comprenant en outre :
un module de gestion thermique (210) raccordé au module de traitement de données (130) et conçu pour, dans une condition où le premier résultat de détection indique que l'une quelconque de l'au moins une cellule (111) présente un risque d'emballement thermique, équilibrer une température de la cellule (111).

3. Bloc de batterie (100) selon la revendication 1 ou 2, dans lequel :
la cellule (111) comprend une plaque d'électrode enroulée autour d'un axe d'enroulement pour former une structure enroulée, la plaque d'électrode comprenant une pluralité de parties rectilignes (410) et une pluralité de parties coudées (420), la pluralité de parties rectilignes sont empilées dans une première direction (X), la pluralité de parties coudées (420) sont au moins en partie coudées selon une forme en arc et raccordent deux parties rectilignes (410) adjacentes de la pluralité de parties rectilignes (410), et la première direction (X) est perpendiculaire à l'axe d'enroulement ; et
l'unité de collecte de niveau un (610) comprend :
une unité de collecte de pression (710) correspondant à l'unité de collecte de température (310), l'unité de collecte de pression (710) étant fixée à la partie rectiligne (410) et/ou la partie coudée (420) et conçue pour collecter des données de pression de la cellule (11), les deuxièmes données de fonctionnement comprenant les données de pression ;
dans lequel dans une condition où les données de pression sont supérieures à un seuil de pression, les deuxièmes données de fonctionnement satisfont à la condition de détection du type de données correspondant.

4. Bloc-batterie (100) selon la revendication 3, dans lequel le module de traitement de données (130) est en outre conçu pour, dans une condition où les données de pression sont supérieures au seuil de pression et que les premières données de température ne satisfont pas à la condition d'emballement par la température, indiquer comme premier résultat de détection que la cellule présente une pression anormale.

5. Bloc de batterie (100) selon l'une quelconque des revendications 1 à 4, dans lequel :
la cellule (111) comprend une cellule nue, un boîtier, et un couvercle supérieur, la cellule nue étant reçue dans un espace de réception fermé par le boîtier et le couvercle supérieur ; et
l'unité de collecte de niveau un (610) comprend : une unité de collecte de pression de gaz et de gaz (810) agencée entre le couvercle supérieur et la cellule nue et conçue pour collecter des données de pression de gaz et au moins un type de concentration de gaz dans le boîtier, dans lequel dans une condition où les données de pression de gaz sont supérieures à un seuil de pression de gaz et que l'un quelconque de l'au moins un type de concentration de gaz est supérieur à un seuil de type de concentration correspondant, les deuxièmes données de fonctionnement satisfont à une condition de détection du type de données correspondant.

6. Bloc-batterie (100) selon la revendication 5, dans lequel le module de traitement de données (130) est en outre conçu pour indiquer le premier résultat de détection comme une anomalie de génération de gaz de la cellule (111) dans une condition où les données de pression de gaz sont supérieures au seuil de pression de gaz, les premières données de température ne satisfont pas à la condition d'emballement par la température, et l'un quelconque de l'au moins un type de concentration de gaz est supérieur au seuil du type de concentration correspondant.

7. Bloc de batterie (100) selon l'une quelconque des revendications 1 à 6, le bloc-batterie (100) comprenant en outre : un deuxième module de collecte (910) conçu pour collecter des données électriques de la cellule, les données électriques comprenant au moins l'une d'une valeur de tension et d'une valeur de courant d'une boucle où se situe la cellule et une valeur de résistance d'isolement de la cellule ; et
dans lequel dans une condition où la valeur de résistance d'isolement est inférieure à un seuil de résistance, la valeur de courant est supérieure à un seuil de courant, ou un taux de diminution de la valeur de tension est supérieur à un seuil de taux, les deuxièmes données de fonctionnement satisfont à la condition de détection du type correspondant de données.

8. Bloc-batterie (100) selon la revendication 7, dans lequel le module de traitement de données (130) est en outre conçu pour indiquer le premier résultat de détection comme une anomalie de court-circuit de la cellule dans une condition où il est déterminé sur la base des données électriques que les deuxièmes données de fonctionnement satisfont à la condition de détection du type correspondant de données et que les premières données de température ne satisfont pas à la condition d'emballement par la température.

9. Appareil électrique comprenant le bloc-batterie (100) selon l'une quelconque des revendications 1 à 8.

10. Procédé de détection d'un bloc-batterie, le procédé étant appliqué à un module de traitement de données, le bloc-batterie comprenant un module de cellule et un premier module de collecte, le module de cellule comprenant au moins une cellule, le premier module de collecte comprenant au moins une première unité de collecte, une unité de collecte de température, et une unité de collecte de niveau un, la première unité de collecte étant agencée dans la cellule, et le procédé comprenant les étapes consistant à :
acquérir (S101) des premières données de fonctionnement de la cellule collectées par la première unité de collecte ; et
réaliser (S102) une détection d'emballement thermique sur la cellule sur la base des premières données de fonctionnement afin d'obtenir un premier résultat de détection, comprenant les étapes consistant à :
acquérir des deuxièmes données de fonctionnement collectées par l'unité de collecte de niveau un et des premières données de température collectées par l'unité de collecte de température, les premières données de fonctionnement comprenant les deuxièmes données de fonctionnement et les premières données de température ;
**caractérisé en ce qu'**il réalise la détection d'emballement thermique sur la cellule par l'intermédiaire des premières données de température quand les deuxièmes données de fonctionnement satisfont à une condition de détection du type de données correspondant.

11. Procédé selon la revendication 10, dans lequel après avoir obtenu le premier résultat de détection, le procédé comprend en outre les étapes consistant à :
commander (S103) un module de gestion thermique pour, dans une condition où le premier résultat de détection indique que l'une quelconque de l'au moins une cellule présente un risque d'emballement thermique, équilibrer une température de la cellule.

12. Support de stockage pour ordinateur sur lequel des programmes ou des instructions sont stockés lesquels, lorsqu'ils sont exécutés par un processeur, amènent le processeur à mettre en œuvre le procédé de détection d'un bloc-batterie selon l'une quelconque des revendications 10 à 11.
